# EUROPEAN PATENT APPLICATION

(11) **EP 4 578 737 A1**
(43) Date of publication of application: **02.07.2025**
(21) Application number: 23383390.4
(22) Date of filing: 27.12.2023
(51) Int. Cl.: B60R 1/066, B60R 1/08, B60R 1/12, B60Q 1/26

(54) **REAR-VIEW MIRROR ASSEMBLY FOR MOTOR VEHICLES**

(71) Applicant: Ficosa Automotive, S.L.U., 08028 Barcelona (ES)
(72) Inventor: RUIZ ORTEGA, Nestor, E08232 VILADECAVALLS (ES)
(74) Representative: ZBM Patents - Zea, Barlocci & Markvardsen

(57) **Abstract**

It comprises a support arm (110) and a mirror head assembly (120), said assembly (120) comprising a mirror head housing (130) and a mirror reflective assembly (160) movable relative to the mirror head housing (130), the latter comprising a mirror reflective element (150), a back plate (140) attached thereto, and a blind spot indicator assembly (170). An opaque barrier (190) is formed in or attached to the back plate (140) for at least covering a first portion of the blind spot indicator assembly (170) in any position of the mirror reflective assembly (160) relative to the mirror head housing (130) such that at least said first portion of the blind spot indicator assembly (170) is not visible from outside the motor vehicle.

## Description

### TECHNICAL FIELD

The present disclosure relates generally to rear-view mirror assemblies for motor vehicles and, more particularly, to rear-view mirror assemblies that include a blind spot indicator assembly.

### BACKGROUND

Most rear-view mirrors include a blind spot indicator assembly intended for detecting the presence of other vehicles or objects in a lane next to the vehicle in which the rear-view mirror is installed. Said blind spot indicator assembly often includes a visual indicator. Such indicator may be, for example, a light emitting diode or the like, suitable for visually warning the driver of another vehicle or object being detected within a blind area of the motor vehicle. Said visual indicator is typically located on a reflective mirror element in rear-view mirror assembly.

The blind spot indicator of a rear-view mirror assembly must be visible mainly or only by the driver. The blind spot indicator assembly is typically mounted in the rear-view mirror, supported by the reflective mirror element in the rear-view mirror assembly located outside the vehicle. As a result, depending on the relative angular position of the reflective mirror element, the blind spot indicator assembly is visible and/or accessible from the outside. Therefore, the blind spot indicator assembly could be affected by external environmental elements such as water, rain, and dust, or even be vandalized. Furthermore, depending on the material or color of the blind spot indicator housing, part of the light from the blind spot indicator itself may pass through the blind spot indicator housing itself and most of the light may escape through regions that are annoying to the driver.

Several approaches have been provided towards a blind spot indicator assembly that is readily viewable such as configuring the blind spot indicator assembly as to direct or emit illumination through a window toward the driver or for example including Fresnel lenses to adapt power of the light to different views of drivers in different seat positions as disclosed in EP1652727.

An exterior rear view mirror with indicator light for indicating situation information to a vehicle driver is disclosed in EP2151350A1. The indicator light includes light sources supported on a split printed circuit board, an optical element, and a light guide so that light emitted from the light sources is coupled into end faces of the light guide.

The rear-view mirror assembly for motor vehicles disclosed in US9663027, filed in the name of the same applicant of the present application includes a blind spot indicator. It comprises a reflective element attached to a clamping plate, an illumination module attached to the reflective element, a printed circuit board fitted in the illumination module for supporting at least one light emitting diode, and a protective case for the illumination module having a metalized and textured surface in its interior. In use, the light emitted by the light emitting diodes bounces on the metalized surface of the protective case emitting light indirectly passing through the surface of the reflecting element through an opening thereof.

The object of the present disclosure is to provide an improved, cost effective rear-view mirror assembly for a motor vehicle with a blind spot indicator assembly, which in use is not visible from the outside of the vehicle where the concerned blind spot indicator assembly is mounted.

### SUMMARY

A rear-view mirror assembly for motor vehicles is provided which has been found to address the above issues in prior art devices while, at the same time, provides further significant advantages as it will be described below.

The present mirror assembly comprises a support arm. The support arm is adapted to be securely mounted to a vehicle. To this effect, the support arm has a first end suitable for being attached to the vehicle, and a second end for being connected to a mirror head assembly.

The mirror head assembly comprises a mirror head housing and a mirror reflective assembly. The mirror reflective assembly is movable relative to the mirror head housing. Preferably, mirror reflective assembly may be allowed to move angularly relative to the mirror head housing. To this effect, a mirror movement mechanism may be provided for the purpose of moving the mirror reflective assembly relative to the mirror head housing.

The mirror reflective assembly comprises a mirror reflective element. The mirror reflective element may be a reflective mirror glass. Other examples of material, such as plastic, are not ruled out. The mirror reflective element has a proximal edge that is arranged closest to the first end of the support arm. The mirror reflective element has an opposite distal edge that is arranged farthest to the first end of the support arm. The mirror reflective assembly further comprises a back plate. Said back plate is attached to the above mentioned mirror reflective element.

The mirror reflective assembly further comprises a blind spot indicator assembly. The blind spot indicator assembly serves the purpose of showing the driver that another vehicle or object has been detected. The blind spot indicator assembly is preferably a stand-alone single unit, that is, a unit that is not part of other elements of the rear-view mirror assembly although, in use, blind spot indicator assembly may cooperate with other elements of the rear-view mirror assembly. The back plate and the blind spot indicator assembly are attached to a rear surface of the mirror reflective element, that is a surface that is not visible from the outside the vehicle.

In said mirror reflective assembly, the mirror reflective element, the back plate, and the blind spot indicator assembly are arranged to move in tandem relative to the mirror head housing.

The mirror reflective assembly further comprises an opaque barrier. Said opaque barrier is formed in or attached to the back plate for at least covering a first portion of the blind spot indicator assembly in any position of the mirror reflective assembly relative to the mirror head housing such that at least said first portion of the blind spot indicator assembly is not visible from outside the motor vehicle. The opaque barrier may be arranged perpendicular to the mirror reflective element, although the opaque barrier could be inclined at an angle other than 90° to the mirror reflective element as required.

The opaque barrier may comprise at least a first barrier portion. The first barrier portion is placed between the distal edge of the mirror reflective element and said first portion of the blind spot indicator assembly. The first barrier portion is arranged to cover said first portion of the blind spot indicator assembly so that the first portion of the blind spot indicator assembly it is not visible from outside the motor vehicle through said distal edge. It may be preferred that the first barrier portion is arranged completely covering the blind spot indicator assembly when viewed from the distal edge of the mirror reflective element.

As stated above, the proximal edge of the mirror reflective element is the edge that is located closest to the first end of the support arm, in use, and the distal edge of the mirror reflective element is the edge that is located farthest to the first end of the support arm, in use. In addition to said proximal and distal edges, top and bottom edges are defined in the mirror reflective element. The top edge of the mirror reflective element is the edge that is located farthest to the ground in use. The bottom edge of the mirror reflective element is the edge that is located closest to the ground in use. The ground is defined herein as the surface on which a vehicle having the present rear-view mirror assembly stands or travels.

The opaque barrier may further comprise a second barrier portion placed between the top edge of the mirror reflective element and a second portion of the blind spot indicator assembly. Such second barrier portion is arranged to cover said second portion of the blind spot indicator assembly so that said first portion of the blind spot indicator assembly is not visible from outside the motor vehicle through the top edge of the mirror reflective element. It may be preferred that the second barrier portion is arranged completely covering the blind spot indicator assembly when viewed from the top edge of the mirror reflective element.

The first barrier portion and the second barrier portion are preferably integrally formed although they may be separate parts if required.

In some examples, at least one of the first barrier portion and the second barrier portion may extend towards the blind spot indicator housing such that at least one portion of the blind spot indicator housing is sandwiched between the opaque barrier and the mirror reflective element.

In other examples, at least one of the first barrier portion and the second barrier portion extends towards the blind spot indicator housing at least partially surrounding the blind spot indicator housing along the mirror reflective element.

It may be preferred that the blind spot indicator assembly extends along a first dimension away from and perpendicular to the mirror reflective element. Further, said opaque barrier may be an opaque wall extending along a second dimension away from and perpendicular to the mirror reflective element. Preferably, said first dimension is shorter than or equal to the second dimension plus 1 mm. More preferably said first dimension is shorter than or equal to the second dimension; and optimally, said first dimension is shorter than or equal to the second dimension minus 1 mm.

The blind spot indicator assembly may comprise a blind spot indicator housing. At least one portion of said blind spot indicator housing protrudes from the back plate towards a direction opposite the mirror reflective element. Said blind spot indicator housing is preferably white. For example, the blind spot indicator housing may be made from a white material such as white plastics, or it may include a while coating, painted in white etc. as long as its inner and outer sides are white so that metallization in the blind spot indicator housing may be not required. The blind spot indicator housing may be made from a white opaque or white translucent material.

The present rear-view mirror assembly may further include a double-side adhesive tape for attaching the mirror reflective element to the back plate and to the blind spot indicator assembly.

A heater may be further included. The heater may be attached to the mirror reflective element. The blind spot indicator assembly and the back plate may be attached to the heater. The heater includes a heating element which, in use, acts as resistive heating of the mirror reflective element as an electric current flows through. The heater may include the double-side adhesive tape for attaching the mirror reflective element to the back plate.

A simple and cost-effective rear-view mirror assembly is achieved in which the blind spot indicator housing is not visible from outside the vehicle even if the mirror reflective element is rotated to the vehicle.

### BRIEF DESCRIPTION OF THE DRAWINGS

A non-limiting example of the present disclosure will be described in the following, with reference to the appended drawings.

In the drawings:
Figure 1 is a sectional view of one example of a blind spot indicator assembly;
Figure 2 is a top plan view of the blind spot indicator assembly shown in figure 1
Figure 3 is an exploded view of a rear-view mirror head assembly for motor vehicles including the blind spot indicator assembly shown in figures 1 and 2;
Figure 4 is perspective end view of the rear-view mirror assembly;
Figure 5 is a sectional view of another example of a blind spot indicator wherein the blind spot indicator assembly is covered by the backplate;
Figure 6 is a sectional view of yet another example of a blind spot indicator wherein the blind spot indicator housing is surrounded by the backplate;
Figure 7 is a top plan view of the blind spot indicator housing covered by the back plate; and
Figures 8a and 8b are part views of the rear-view mirror head assembly with the mirror reflective element 150 rotated to the mirror head housing.

### DETAILED DESCRIPTION OF EXAMPLES

Referring to figures of the drawings, non-limiting examples of the present rear-view mirror assembly for motor vehicles 100 are provided. The rear-view mirror assembly 100 includes a mirror head 120 that also comprises a mirror head housing 130, a mirror reflective element 150 and also a blind spot indicator assembly 170 that is at least partially not visible in use from outside the vehicle, not shown, even if said mirror reflective element 150 is rotated to the mirror head housing 130, as it will be described in detail further below.

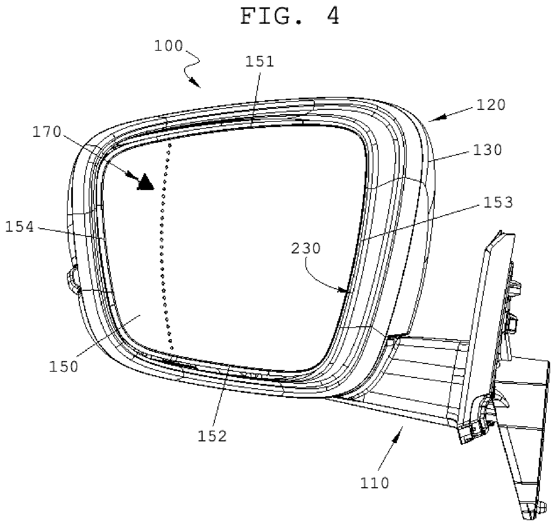

The rear-view mirror assembly 100 comprises a support arm 110, as shown in figure 4. The support arm 110, in use, is securely mounted to the vehicle, not shown, through a first end. A second end of the support arm 110 is configured for being connected to a mirror head assembly 120.

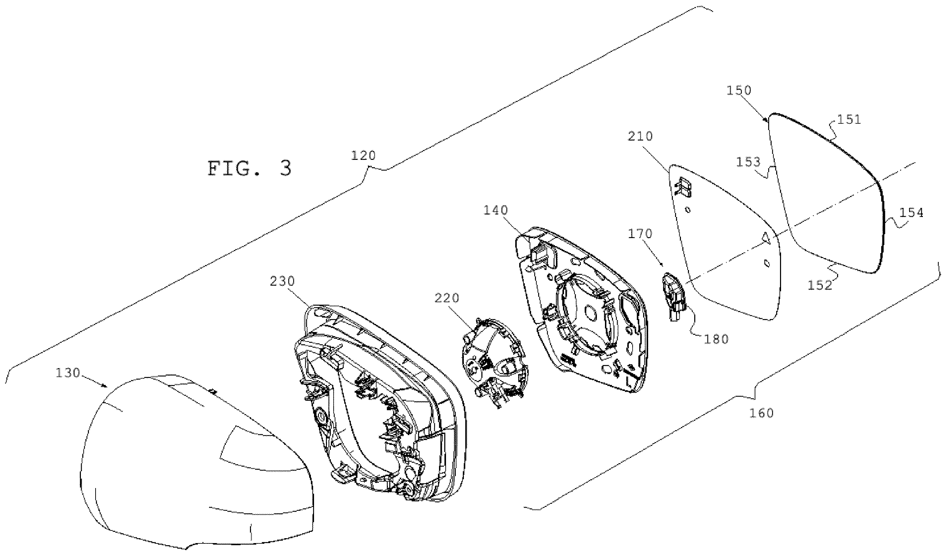

As also shown in figure 4, the mirror head assembly 120 comprises a mirror head housing 130 and a mirror reflective assembly 160. The mirror head housing 130 of the mirror head assembly 120 is configured for receiving a mirror frame 230 therein with the above-mentioned mirror reflective element 150, as shown in figure 3.

The mirror reflective assembly 160 comprises said mirror reflective element 150 and also a back plate 140. The back plate 140 is attached to the mirror reflective element 150.

The mirror reflective element 150 may be, for example, a mirror glass. Said mirror reflective element 150 is angularly movable relative to the mirror head housing 130 through a mirror movement mechanism 220, as shown in figure 3. The mirror movement mechanism 220 is configured for adjusting the orientation of the mirror reflective element 150 as required.

Referring back to figure 4 of the drawings, the mirror reflective element 150 has a top edge 151, a bottom edge 152, a proximal edge 153, and a distal edge 154. The top edge 151 is located farthest to the ground in use. The bottom edge 152 is located closest to the ground in use. The ground is defined herein as the surface on which a vehicle having the present rear-view mirror assembly 100 stands or travels. The proximal edge 153 is arranged closest to the first end of the support arm 110. The distal edge 154 is arranged opposite the proximal edge 153 and located farthest to the first end of the support arm 110.

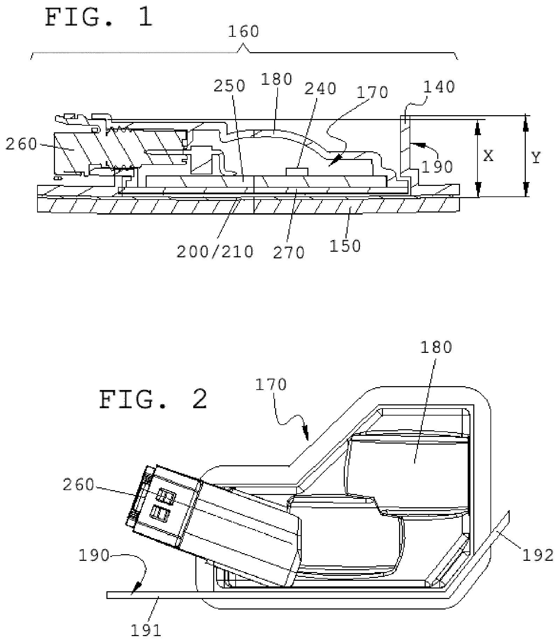

Referring to figures 1-3 of the drawings, the mirror reflective assembly 160 further comprises a blind spot indicator assembly 170 as stated above. The blind spot indicator assembly 170 in this example is a stand-alone single unit that serves the purpose of showing a driver that another vehicle or object has been detected in the immediate area. The blind spot indicator assembly 170 is not part of other elements of the rear-view mirror assembly 100 although in use it may cooperate with them.

As shown in figure 4, the blind spot indicator assembly 170 is arranged at a corner portion of the mirror reflective assembly 160, near an exterior side located farthest to the vehicle body, proximal to the distal edge 154.

The blind spot indicator assembly 170 comprises a blind spot indicator housing 180. As shown in figure 1, the blind spot indicator housing 180 is arranged such that at least one portion thereof protrudes from the back plate 140 towards a direction opposite the mirror reflective element 150. The blind spot indicator housing 180 is preferably white such as, for example, made from a white material, for example white plastics. The blind spot indicator housing 180 could alternatively include a white coating or be painted in white as long as its inner and outer sides are white. The blind spot indicator housing 180 may be made from a white opaque or translucent material.

In the mirror reflective assembly 160, the mirror reflective element 150, the back plate 140, and the blind spot indicator assembly 170 are arranged to move in tandem relative to the mirror head housing 130. This means that the mirror reflective element 150, the back plate 140, and the blind spot indicator assembly 170 are arranged to move together by means of the mirror movement mechanism 220 illustrated in figure 3 of the drawings.

Referring now to figure 2, the mirror reflective assembly 160 further comprises an opaque barrier 190. The opaque barrier 190 is formed in or attached to the back plate 140 for at least covering a first portion of the blind spot indicator assembly 170 in any position of the mirror reflective assembly 160 relative to the mirror head housing 130 such that at least said first portion of the blind spot indicator assembly 170 is not visible from outside the motor vehicle.

More specifically, the opaque barrier 190 in this example is perpendicular to the mirror reflective element 150 as shown in figure 1. The opaque barrier 190 comprises a first barrier portion 191 and a second barrier portion 192 which, in the example shown in figure 2, are integrally formed.

With continued reference to figure 2, the first barrier portion 191 of the opaque barrier 190 is placed between the distal edge 154 of the mirror reflective element 150 and the above mentioned first portion of the blind spot indicator assembly 170. The first barrier portion 191 is arranged to cover said first portion of the blind spot indicator assembly 170 so that said first portion of the blind spot indicator assembly 170 is not visible from outside the motor vehicle through the distal edge 154 of the mirror reflective element 150. The first barrier portion 191 is arranged in this case completely covering the blind spot indicator assembly 170 when viewed from the distal edge 154 of the mirror reflective element 150.

Referring also to figure 2, the above mentioned second barrier portion 192 of the opaque barrier 190 is arranged between the top edge 151 of the mirror reflective element 150 and a second portion of the blind spot indicator assembly 170. The second barrier portion 192 is arranged to cover the second portion of the blind spot indicator assembly 170 so that said the first portion of the blind spot indicator assembly 170 is not visible from outside the motor vehicle through the top edge 151 of the mirror reflective element 150. In the example shown in the figures, the second barrier portion 192 is arranged partially completely covering the blind spot indicator assembly 170 when viewed from the top edge 151 of the mirror reflective element 150.

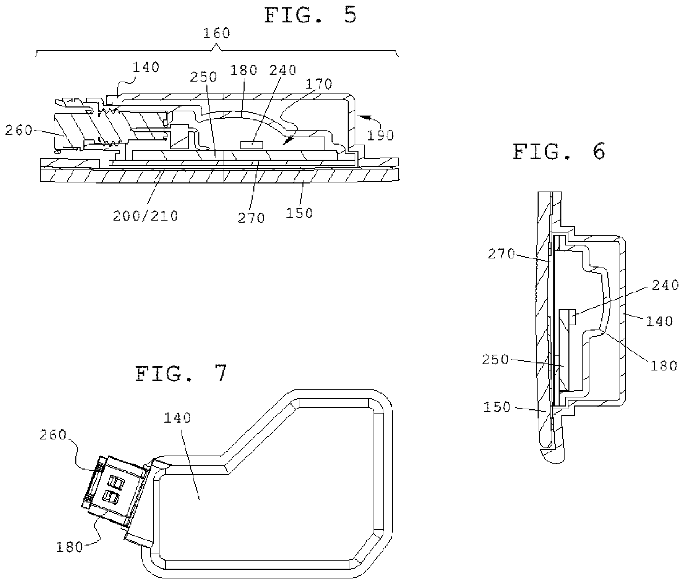

As shown in figure 2, the first barrier portion 191 and the second barrier portion 192 extend towards the blind spot indicator housing 180. In the example of figure 5, the blind spot indicator housing 180 is covered by the backplate 140 such that at least one portion of the blind spot indicator housing 180 is sandwiched between the opaque barrier 190 and the mirror reflective element 150. The opaque barrier 190 may be configured to cover 25%, 50%, 75%, or 100% of the blind spot indicator assembly 170 in a plane parallel to the mirror reflective element 150.

In the example shown in figure 6 and 7, the blind spot indicator housing 180 is surrounded by the backplate 140. In particular, the opaque barrier 190 extends towards the blind spot indicator housing 180 at least partially surrounding at least one portion of the blind spot indicator housing 180 along the mirror reflective element 150. The opaque barrier 190 may be configured to surround more than 25%, preferably more than 50%, optimally more than 75% of the blind spot indicator assembly 170.

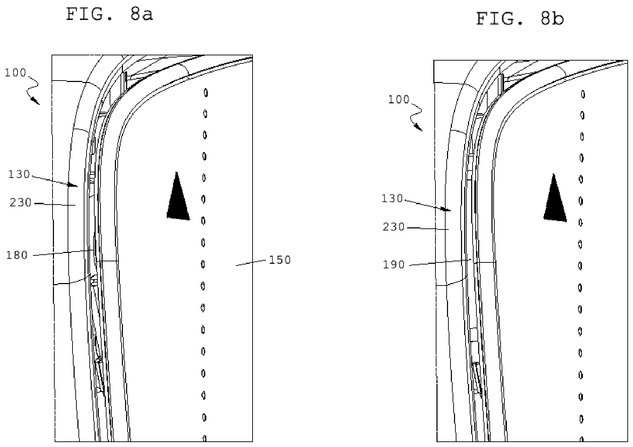

With the above configuration, the blind spot indicator assembly 170 is at least partially not visible in use from outside the vehicle even if the mirror reflective element 150 is rotated to the mirror head housing 130, as shown in figures 8a and 8b. Figure 8a shows the blind spot indicator housing 180 between the mirror head housing 130 and the mirror reflective element 150. In figure 8b, the blind spot indicator housing 180 is not visible as it is covered by the opaque barrier 190, with the opaque barrier 190 being visible from the exterior.

Referring to figure 1, the blind spot indicator assembly 170 extends along a first dimension X away from and perpendicular to the mirror reflective element 150. The opaque barrier 190 may be an opaque wall extending along a second dimension Y away from and perpendicular to the mirror reflective element 150. The first dimension X is shorter than or equal to the second dimension Y plus 1 mm (X ≤ Y+1mm).

A double-side adhesive tape 200 is also provided. Said double-side adhesive tape 200 is arranged for attaching the mirror reflective element 150 to the back plate 140 and to the blind spot indicator assembly 170.

A heater 210 is also included comprising a heating element. In use, said heating element of the heater 210 acts as resistive heating of the mirror reflective element 150 as an electric current flows through. In use, the heater 210 is attached to the mirror reflective element 150. Thus, the blind spot indicator assembly 170 and the back plate 140 are attached to the heater 210. The heater 210 includes the double-side adhesive tape 200 for attaching the mirror reflective element 150 to the back plate 140. The blind spot indicator assembly 170 is in turn attached to the heater 210. The back plate 140 may have a hole formed therein to allow a rear portion of the blind spot indicator assembly 170 to protrude there through.

The blind spot indicator assembly 170 includes a light source 240 as shown in figure 1. The light source 240 is connected to a printed circuit board (PCB) 250. A light control assembly is provided to receive the light projected from the light source 240. In turn, a lens assembly 270 as shown in figures 1, 5, and 6 is provided to receive light from the light control assembly and to direct light from the light source 240 to the driver through the mirror reflective element 150.

The blind spot indicator housing 180 is configured for receiving a connection cable intended to be connected to the PCB 250 for supplying power to at least one light source 240.

The blind spot indicator housing 180 is configured for receiving the connection cable comprising a connector 260 intended to be connected to the PCB 250 for at least powering supply to at least one light source 240. A connector engaging portion may be provided in the blind spot indicator housing 180 for axially retaining the connector 260 when inserted therein. In use, a gap between the blind spot indicator assembly 170 and the back plate 140 in a direction towards the mirror reflective element 150 may be defined between the blind spot indicator housing 180 and the back plate 140 for facilitating the insertion of said connector 260 into the blind spot indicator assembly 170.

The blind spot indicator housing 180, in use, is configured for receiving said connection cable comprising the connector 260 along a vertical direction from the bottom edge 152 to the top edge 151 or along a diagonal direction from the bottom and proximal edges 152, 153.

One example of the present rear-view mirror assembly for motor vehicles has been disclosed herein. However, other alternatives, modifications, uses and/or equivalents thereof are possible. Furthermore, all possible combinations of the described example are also covered by the present disclosure. The scope of the present disclosure should not be limited by the particular example disclosed herein but should be determined only by a fair reading of the claims that follow.

Reference signs related to drawings placed in parentheses in the claims are solely for attempting to increase the intelligibility of the claims and shall not be construed as limiting their scope.

## Claims

1. A rear-view mirror assembly for motor vehicles (100), the mirror assembly (100) comprising a support arm (110) having a first end suitable for being attached to a vehicle and a second end for being connected to a mirror head assembly (120), the mirror head assembly (120) comprising:
- a mirror head housing (130); and
- a mirror reflective assembly (160) movable relative to the mirror head housing (130) and comprising:
- a mirror reflective element (150) having a proximal edge (153) arranged closest to the first end of the support arm (110), and a opposite distal edge (154) arranged farthest to the first end of the support arm (110);
- a back plate (140) attached to the mirror reflective element (150); and
- a blind spot indicator assembly (170);
wherein the mirror reflective element (150), the back plate (140) and the blind spot indicator assembly (170) are arranged to move in tandem relative to the mirror head housing (130);
**characterized in that** the mirror reflective assembly (160) further comprises:
- an opaque barrier (190) formed in or attached to the back plate (140) for at least covering a first portion of the blind spot indicator assembly (170) in any position of the mirror reflective assembly (160) relative to the mirror head housing (130) such that at least said first portion of the blind spot indicator assembly (170) is not visible from outside the motor vehicle.

2. The rear-view mirror assembly (100) of claim 1, wherein the opaque barrier (190) comprises at least a first barrier portion (191) placed between the distal edge (154) of the mirror reflective element (150) and said first portion of the blind spot indicator assembly (170), the first barrier portion (191) being arranged to cover said first portion of the blind spot indicator assembly (170) so that the first portion of the blind spot indicator assembly (170) is not visible from outside the motor vehicle through said distal edge (154).

3. The rear-view mirror assembly (100) of claim 1 or 2, wherein the mirror reflective element (150) further comprises a top edge (151), arranged farthest to the ground in use, and an opposite bottom edge (152), arranged closest to the ground in use; wherein the opaque barrier (190) also comprises a second barrier portion (192) placed between the top edge (151) of the mirror reflective element (150) and a second portion of the blind spot indicator assembly (170), and the second barrier portion (192) is arranged to cover the second portion of the blind spot indicator assembly (170) so that the second portion of the blind spot indicator assembly (170) is not visible from outside the motor vehicle through the top edge (151) of the mirror reflective element (150).

4. The rear-view mirror assembly (100) of any preceding claim,
wherein the blind spot indicator assembly (170) extends along a first dimension (X) away from and perpendicular to the mirror reflective element (150);
wherein the opaque barrier is an opaque wall (190) extending along a second dimension (Y) away from and perpendicular to the mirror reflective element (150); and
wherein the first dimension (X) is shorter than or equal to the second dimension (Y) plus 1 mm.

5. The rear-view mirror assembly (100) of any preceding claim, wherein the opaque barrier (190) is arranged perpendicular to the mirror reflective element (150).

6. - The rear-view mirror assembly (100) of any preceding claim, wherein the blind spot indicator assembly (170) comprises a blind spot indicator housing (180) at least one portion of which protrudes from the back plate (140) towards a direction opposite the mirror reflective element (150).

7. The rear-view mirror assembly (100) of claim 6, wherein said blind spot indicator housing (180) is white.

8. The rear-view mirror assembly (100) of any preceding claim, wherein the blind spot indicator assembly (170) is a stand-alone single unit.

9. The rear-view mirror assembly (100) of any preceding claim, wherein it further includes a double-side adhesive tape (200) for attaching the mirror reflective element (150) to the back plate (140) and to the blind spot indicator assembly (170).

10. The rear-view mirror assembly (100) of any preceding claim, wherein it further includes a heater (210) attached to the mirror reflective element (150), and wherein the blind spot indicator assembly (170) and the back plate (140) are attached to the heater (210), the heater (210) having a heating element which in use acts as resistive heating of the mirror reflective element (150) as an electric current flows through.

11. The rear-view mirror assembly (100) of any of the claims 2-10, wherein the first barrier portion (191) is arranged completely covering the blind spot indicator assembly (170) when viewed from the distal edge (154) of the mirror reflective element (150).

12. The rear-view mirror assembly (100) of any of the claims 3-11, wherein the second barrier portion (192) is arranged completely covering the blind spot indicator assembly (170) when viewed from the top edge (151) of the mirror reflective element (150).

13. The rear-view mirror assembly (100) of any of the claims 3-12, wherein the first barrier portion (191) and the second barrier portion (192) are integrally formed.

14. The rear-view mirror assembly (100) of any of the claims 6-13, wherein at least one of the first barrier portion (191) and the second barrier portion (192) extends towards the blind spot indicator housing (180) such that at least one portion of the blind spot indicator housing (180) is sandwiched between the opaque barrier (190) and the mirror reflective element (150).

15. The rear-view mirror assembly (100) of any of the claims 6-14, wherein at least one of the first barrier portion (191) and the second barrier portion (192) extends towards the blind spot indicator housing (180) at least partially surrounding at least one portion of the blind spot indicator housing (180) along the mirror reflective element (150).
